# EUROPEAN PATENT SPECIFICATION

(11) **EP 2 139 254 B1**
(45) Date of publication and mention of the grant of the patent: **18.11.2015**
(21) Application number: 08700662.3
(22) Date of filing: 16.01.2008
(51) Int. Cl.: H04W 4/00

(54) **METHOD AND APPARATUS FOR REPORTING SUPPORTING CAPABILITY OF A CELL FOR DOWNLINK HIGH-LEVEL MODULATION**
VERFAHREN UND VORRICHTUNG ZUM MELDEN DER UNTERSTÜTZUNGSFÄHIGKEIT EINER ZELLE FÜR ABWÄRTSSTRECKENMODULATION AUF HOHER EBENE
MÉTHODE ET APPAREIL SIGNALANT LA CAPACITÉ D'UNE CELLULE À EFFECTUER LA MODULATION D'UNE LIAISON DESCENDANTE DE HAUT NIVEAU

(30) Priority: 21.03.2007 CN 200710087261
(43) Date of publication of application: 30.12.2009
(73) Proprietor: ZTE Corporation, Shenzhen, Guangdong 518057 (CN)
(72) Inventor: KE, Yazhu, Guangdong 518057 (CN); CHENG, Xiang, Guangdong 518057 (CN)
(74) Representative: Vossius & Partner Patentanwälte Rechtsanwälte mbB
(86) International application number: PCT/CN2008/000112
(87) International publication number: WO 2008/113244

(56) References cited:
- WO-A1-01/50669
- WO-A1-03/065627
- WO-A1-2005/020476
- CN-A- 1 435 963
- CN-A- 1 585 505
- CN-A- 1 913 698
- RNSAP EDITOR: "Output for RNSAP from the Tabular Format Ad Hoc â Editorâ s proposal", 3GPP DRAFT; R3-99H73 25.423 V1.5.4 - TABULAR FORMAT AD HOC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. Paris, France; 19991206 - 19991210, 20 December 1999 (1999-12-20), XP050607915, [retrieved on 1999-12-20]
- AMRICO M C CORREIA ET AL: "Multi-Resolution Broadcast/Multicast Systems for MBMS", IEEE TRANSACTIONS ON BROADCASTING, IEEE SERVICE CENTER, PISCATAWAY, NJ, US, vol. 53, no. 1, 1 March 2007 (2007-03-01), pages 224-234, XP011172015, ISSN: 0018-9316, DOI: 10.1109/TBC.2007.891705

## Description

### Field of the Invention

The present invention relates to radio communication system, in particular to a method and an apparatus for reporting the supporting capability of a cell for downlink high-level modulation, which is used for a drift radio network controller (DRNC) reporting whether an associative cell under the jurisdiction of the DRNC supports downlink high-level modulation or not.

### Background of the Invention

An access network comprises one or multi radio network subsystems. Each radio network subsystem is a subnetwork in the access network; each radio network subsystem includes a radio network controller and one or multi nodes B. The radio network controller is a network element which is responsible for controlling radio resources of the access network. The node B is mainly used for processing the physical layer of an air interface and carrying out basic management operations for the radio resources.

When communication connection is established between a user device and multi radio network controllers, if different radio network controllers are connected with each other through Iur interfaces, the radio network controller which is responsible for connecting the user device with a core network is called serving radio network controller (SRNC), and the radio network controller which is responsible for transmitting signaling and data for the user device but not communicated with the core network is called drift radio network controller (DRNC). In addition, the DRNC is also responsible for transmitting the supporting capability of the cells of the node B under the jurisdiction of the DRNC to the SRNC.

In the technical optimization for the present technology, in order to improve the quality of user experience and the throughput of the system, high-speed downlink grouping access technology is continuously evolved, and 64QAM, a 64QAM high-level modulation mode has been introduced currently.

Because the technology is newly introduced to the system, only new node B devices can support the technology, but the old node B devices cannot. In terms of a terminal capable of supporting the technology, all the functions of the technology can be normally used only when the terminal runs in coordination of a node B which also supports the technology. When the access network determines whether to use the technology or not, in order to make an accurate determination, the backward compatibility needs to be considered and whether the node B can support the technology or not needs to be identified.

WO 03/065627 A1 relates to a method of managing and optimizing radio resources in a CDMA system. The method transmits the cell attribute information of the drift base station controller with which the user terminal currently establishes the link to the serving base station controller with which the initial link was established through the interface between the base station controllers. In addition, WO 01/50669 A1 relates to an adaptive point to multipoint wireless communication system.

"RNSAP EDITOR: "Output for RNSAP from the Tabular Format Ad Hoc - Editor's proposal", 3GPP DRAFT; R3-99H73 25.423 V1.5.4-TABULAR FORMAT AD HOC 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANC, vol. TSG RAN, no. Paris, France; 19991206-19991210, 20 December 1999 (11999-12-20). XP050607915" relates to radio network layer signaling procedures between RNCs in UTRAN.

WO 2005/020476 relates to the point-to-multipoint Multimedia Broadcast and Multicast Service, especially to a method for Serving Radio Network Controller inquiring of Drifting Radio Network Controller about type of MBMS channels of specific cell on interface Iur.

"AMERICO M C CORREIA ET AL: 'Multi-Resolution Broadcast/Multicast Systems for MBMS', IEEE TRANSACTIONS ON BROADCASTING, IEEE SERVICE CENTER, PISCATAWAY, NJ, US, vol. 53, no. 1, 1 March 2007 (2007-03-01), pages 224-234, XP011172015, ISSN:0018-9316, DOI:10.1109/TBC.2007.891705" relates to different multi-resolution broadcast systems for Wideband Code Division Multiple Access cellular mobile networks, namely, multi-code, hierarchical QAM constellations and multi-antenna systems.

Therefore, a method and an apparatus for reporting the supporting capability of a cell for downlink high-level modulation, which are used for a drift radio network controller (DRNC) reporting whether an associative cell under the jurisdiction of the DRNC supports downlink high-level modulation or not, are urgently needed for solving the above problems.

### Summary of the Invention

A method and an apparatus according to the present invention is set out in the independent claims 1 and 12. Preferred features are laid out in the dependent claims.

Other characteristics and advantages of the invention are illustrated in the following description of the invention and partially will become obvious upon reviewing the description of the invention or be understood by implementing the invention. The objectives and other advantages of the invention can be realized and acquired through the written description, claims and structures that are especially shown in the figures.

### Description of the Drawings

The drawings provide a further understanding for the invention and form a part of the description. They are used to explain the invention together with the embodiments of the invention, but do not limit the invention. In the drawings:
Figure 1 is the interaction diagram of the method for reporting the supporting capability of a cell for downlink high-level modulation according to the first embodiment of the present invention.
Figure 2 is the interaction diagram of the method for reporting the supporting capability of a cell for downlink high-level modulation according to the second embodiment of the present invention.
Figure 3 is the block diagram of the apparatus for reporting the supporting capability of a cell for downlink high-level modulation according to the present invention.

### Detailed Description of the Embodiments

The following is the description of the preferred embodiments of the invention by referring to the figures. It should be understood that the preferred embodiments herein are only used for describing and explaining the invention but not for limiting the invention.

The present invention aims to provide a method and an apparatus for a drift radio network controller (DRNC) reporting the supporting capability of a cell under the jurisdiction of the DRNC for downlink high-level modulation, which enables the SRNC to acquire information to participate in determining whether to use the downlink high-level modulation for a user device by the DRNC reporting to the SRNC whether the cell under the jurisdiction of the DRNC supports downlink high-level modulation.

The method of the present invention for reporting the supporting capability of a cell for downlink high-level modulation includes the following steps: the DRNC reports the supporting capability of an associative cell for downlink high-level modulation through signaling. Concretely, after receiving a request message from a serving radio network controller (SRNC), the DRNC reports the supporting capability information of an associative cell for downlink high-level modulation to the SRNC through signaling, wherein the associative cell is an adjacent cell that successfully establishes or adds a link/links after receiving the request message by the DRNC.

Wherein, the mentioned signaling is any of the following messages:
radio link setup response message: be triggered by radio link setup request message;
radio link addition response message: be triggered by radio link addition request message;
radio link setup failure message: be triggered by radio link setup request message; and
radio link addition failure message: be triggered by radio link addition request message;

The associative cell involves one or more cells.

When the DRNC receives a radio link setup request message or a radio link addition request message and successfully establishes or additions the needed one or multi links, the radio link setup response message or the radio link addition response message carries information of the adjacent cell that successfully establishes or adds a link/links.

Optionally, when the DRNC receives a radio link setup request message or a radio link addition request message in which multi radio links need to be established or added, and some links are successfully established or added, while some links fail to be established or added, the radio link setup failure message or the radio link addition failure message carries information of the adjacent cell that successfully establishes or adds a link/links.

A downlink high-level modulation mode refers to the downlink 64QAM or downlink OQAM modulation mode.

In addition, the method representing whether a cell supports high-level modulation information can be the following methods:
I. Adding the supporting capability information of downlink 64QAM and/or the supporting capability information of all modulation capability of downlink 64QAM and under downlink 64QAM in the value of a cell capability container of the present cell, adopting the bit expression mode, 0 indicating nonsupport, and 1 indicating support;
II. Adding the supporting capability information of downlink 64QAM and/or the supporting capability information of all modulation capability of 64QAM and under 64QAM in the value of a cell capability container of the present signaling cell, adopting the bit expression mode, 0 indicating nonsupport, and 1 indicating support; and
III. Adding expanded cell capability information.

Wherein, the cell capability information adopts the following expression modes for high-level modulation supporting information:
Supporting indication of 64QAM, and/or supporting indication of 64QAM;
Supporting indication of 64QAM, and/or supporting indication of all modulation capabilities of 64QAM and under 64QAM; and
Supporting indication of all modulation capabilities of 64QAM and under 64QAM, and/or supporting indication of all modulation capabilities of OQAM and under OQAM.

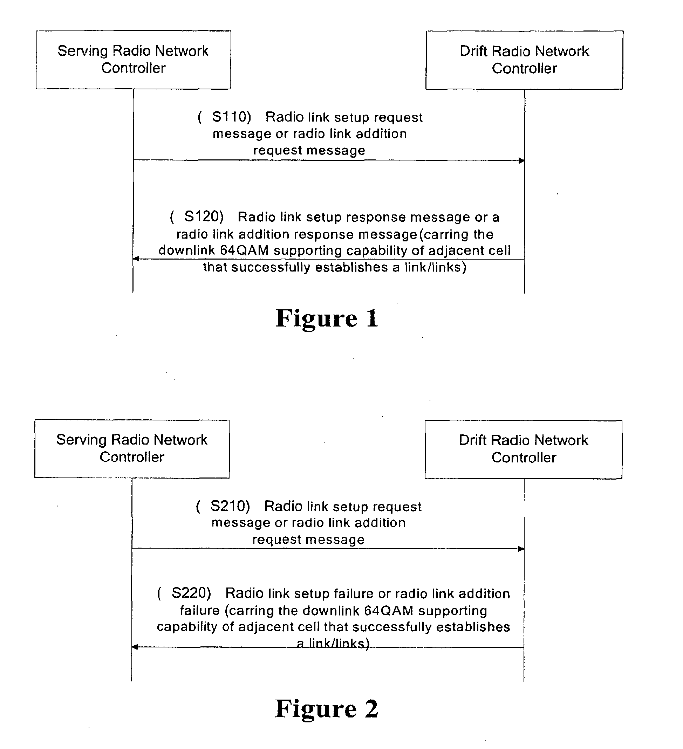

Figure 1 is the interaction diagram of the method for reporting the supporting capability of a cell for downlink high-level modulation according to the first embodiment of the present invention, and Figure 2 is the interaction diagram of the method for reporting the supporting capability of a cell for downlink high-level modulation according to the second embodiment of the present invention. The method of the present invention for reporting the supporting capability of a cell for downlink high-level modulation is described in detail by referring to Figure 1 with Figure 2 as follows.

### First embodiment

Figure 1 is the interaction diagram of the method for reporting the supporting capability of a cell for downlink high-level modulation according to the first embodiment of the present invention. As shown in Figure 1, the method for the DRNC reporting the supporting capability of the cell under the jurisdiction of the DRNC for downlink high-level modulation through a flow that successfully establishes or adds a link is provided, the method includes the following steps:
Step S110, the SRNC sends a radio link setup request message or a radio link addition request message to the DRNC; and
Step S120, when the DRNC successfully establishes or adds all links that need to be established or added, the DRNC sends a radio link setup response message or a radio link addition response message to the SRNC, and the radio link setup response message or the radio link addition response message carries the downlink 64QAM supporting capability information of the adjacent cell that successfully establishes a link/links.

### Second embodiment

Figure 2 is the interaction diagram of the method for reporting the supporting capability of a cell for downlink high-level modulation according to the second embodiment of the present invention. As shown in Figure 2, the method for the DRNC reporting the supporting capability of the cell under the jurisdiction of the DRNC for downlink high-level modulation through a flow failing to establish or add a link is provided, the method includes the following steps:
Step S210, the SRNC sends a radio link setup request message or a radio link addition request message to the DRNC; and
Step S220, when the DRNC successfully establishes or addition part of links that need to be established or additiond, the DRNC sends a radio link setup failure message or a radio link addition failure message to the SRNC, and the radio link setup failure message or the radio link addition failure message carries the downlink 64QAM supporting capability information of the adjacent cell that successfully establishes a link/links.

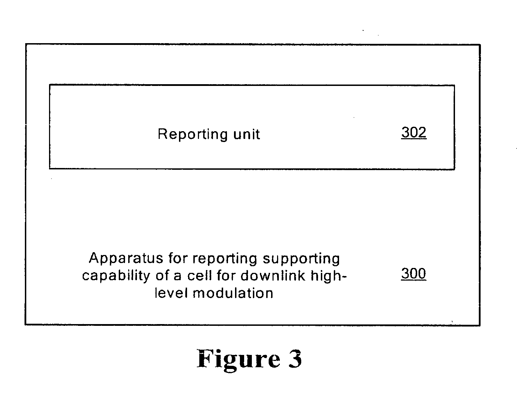

Figure 3 is the block diagram of the apparatus 300 for reporting the supporting capability of a cell for downlink high-level modulation according to the present invention. As shown in Figure 3, the apparatus comprises a reporting unit 302 which is used for reporting the supporting capability information of an associative cell for downlink high-level modulation to the SRNC through signaling after receiving a request message from the SRNC.

Wherein, the request message can include any of the following messages: radio link setup request message and radio link addition request message. The signaling can include any of the following messages or combinations thereof: radio link setup response message, radio link setup failure message, radio link addition response message and radio link addition failure message.

When the DNRC receives the radio link setup request message or the radio link addition request message and successfully establishes or additions one or multi links, the radio link setup response message or the radio link addition response message sent to the SRNC by the reporting unit carries the supporting capability information of the associative cell for downlink high-level modulation.

Optionally, when the DNRC receives the radio link setup request message or the radio link addition request message and establishes or additions partial links and fails to establish or addition partial links, the radio link setup failure message or the radio link addition failure message sent to the SRNC by the reporting unit carries the supporting capability information of the associative cell for downlink high-level modulation.

Wherein, the associative cell is an adjacent cell that successfully establishes or adds a link/links after receiving the request message by the DRNC, and the associative cell involves one or more cells.

In addition, the reporting through signaling is realized by adding information indicating the supporting capability for downlink high-level modulation in the value of a cell capability container of a present cell. The signaling is realized in bit mode, wherein 0 indicates nonsupport of downlink high-level modulation, and 1 indicates support of downlink high-level modulation.

The supporting capability information of downlink high-level modulation represents the supporting capability for the downlink high-level modulation by adding expanded cell capability information.

The supporting capability of downlink high-level modulation includes any of the following capabilities or combinations thereof: supporting capability for downlink 64QAM, supporting capability for downlink OQAM, supporting capability for all modulation modes of downlink 64QAM and under downlink 64QAM, and supporting capability for all modulation modes of downlink OQAM and under downlink OQAM.

In a word, the method and the apparatus for the DRNC reporting the supporting capability of a cell under the jurisdiction of the DRNC for downlink high-level modulation are provided in the invention, which enable the SRNC to acquire information to participate in determining whether to use the downlink high-level modulation for a user device by the DRNC reporting to the SRNC whether the cell under the jurisdiction of the DRNC supports downlink high-level modulation.

The preferred embodiments of the present invention are described for the purpose of illustration, not for limiting the present invention. For those skilled in the art, various alterations and modifications can be made to the present invention. Any alterations, substitutions and modifications falling into the principle of the present invention will fall within the scope of the present invention as defined by the appended claims.

## Claims

1. A method for reporting the supporting capability of a cell for downlink high-level modulation, which is used for a drift radio network controller, DRNC, reporting whether an associative cell supports downlink high-level modulation or not, wherein the method includes the following steps:
after receiving a request message from a serving radio network controller, SRNC, the DRNC reports the supporting capability information of the associative cell for downlink high-level modulation through signaling to the SRNC, wherein the associative cell is an adjacent cell that successfully establishes or adds a link/links after receiving the request message by the DRNC.

2. The method according to Claim 1 is **characterized in that** the request message includes any of the following messages: radio link setup request message and radio link addition request message.

3. The method according to Claim 2 is **characterized in that** the signaling includes any of the following messages: radio link setup response message, radio link setup failure message, radio link addition response message and radio link addition failure message.

4. The method according to Claim 3 is **characterized in that** when the DNRC receives the radio link setup request message or the radio link addition request message and successfully establishes or additions one or multi needed links, the radio link setup response message or the radio link addition response message sent to the SRNC carries the supporting capability information of the associative cell for downlink high-level modulation.

5. The method according to Claim 3 is **characterized in that** when the DNRC receives the radio link setup request message or the radio link addition request message and establishes or adds partial links and fails to establish or add partial links, the radio link setup failure message or the radio link addition failure message sent to the SRNC carries the supporting capability information of the associative cell for downlink high-level modulation.

6. The method according to any of the preceding claims 1 to 5 is **characterized in that** the associative cell involves one or more cells.

7. The method according to any of the preceding claims 1 to 5 is **characterized in that** the reporting through signaling is realized by adding information indicating the supporting capability for downlink high-level modulation in the value of a cell capability container of a present interface element.

8. The method according to Claim 7 is **characterized in that** the supporting capability information of the downlink high-level modulation is realized in bit mode, wherein 0 indicates nonsupport of downlink high-level modulation, and 1 indicates support of downlink high-level modulation.

9. The method according to any of the preceding claims 1 to 5 is **characterized in that** the supporting capability information of downlink high-level modulation represents the supporting capability for the downlink high-level modulation by adding expanded cell capability information.

10. The method according to Claim 9 is **characterized in that** the representation method of the supporting capability information of downlink high-level modulation is realized through support indication or nonsupport indication.

11. The method according to Claim 1 is **characterized in that** the supporting capability for downlink high-level modulation includes any of the following capabilities or combinations thereof: supporting capability for downlink 64QAM, supporting capability for downlink OQAM, supporting capability for all modulation modes of downlink 64QAM and under downlink 64QAM, and supporting capability for all modulation modes of downlink OQAM and under downlink OQAM.

12. An apparatus (300) for reporting the supporting capability of a cell for downlink high-level modulation, which is used for a drift radio network controller, DRNC, reporting whether an associative cell under the jurisdiction of the DRNC supports downlink high-level modulation or not, wherein the apparatus (300) comprises:
a reporting unit (302) which is used for reporting the supporting capability information of the associative cell for downlink high-level modulation through signaling to a serving radio network controller, SRNC, after receiving a request message from the SRNC, wherein the associative cell is an adjacent cell that successfully establishes or adds a link/links after receiving the request message by the DRNC.

13. The apparatus (300) according to Claim 12 is **characterized in that** the request message includes any of the following messages: radio link setup request message and radio link addition request message; and the signaling includes any of the following messages or combinations thereof: radio link setup response message, radio link setup failure message, radio link addition response message and radio link addition failure message.

14. The apparatus (300) according to Claim 13 is **characterized in that** when the DNRC receives the radio link setup request message or the radio link addition request message and successfully establishes or additions one or multi links, the radio link setup response message or the radio link addition response message sent to the SRNC by the reporting unit (302) carries the supporting capability information of the associative cell for downlink high-level modulation.

15. The apparatus (300) according to Claim 13 is **characterized in that** when the DNRC receives the radio link setup request message or the radio link addition request message and establishes or adds partial links and fails to establish or add partial links, the radio link setup failure message or the radio link addition failure message sent to the SRNC by the reporting unit (302) carries the supporting capability information of the associative cell for downlink high-level modulation.

16. The apparatus (300) according to any of preceding claims 12 to 15 is **characterized in that** the associative cell involves one or more cells.

17. The apparatus (300) according to any of preceding claims 12 to 15 is **characterized in that** the reporting through signaling is realized by adding information indicating the supporting capability for downlink high-level modulation in the value of a cell capability container of a present interface element; and the supporting capability information of the downlink high-level modulation is realized in bit mode, wherein 0 indicates nonsupport of downlink high-level modulation, and 1 indicates support of downlink high-level modulation.

18. The apparatus (300) according to any of the preceding claims 12 to 15 is **characterized in that** the supporting capability information of downlink high-level modulation represents the supporting capability for the downlink high-level modulation by adding expanded cell capability information, and the representation method of the supporting capability information of the downlink high-level modulation is realized through support indication or nonsupport indication.

19. The apparatus (300) according to Claim 12 is **characterized in that** the supporting capability for downlink high-level modulation includes any of the following capabilities or combinations thereof: supporting capability for downlink 64QAM, supporting capability for downlink OQAM, supporting capability for all modulation modes of downlink 64QAM and under downlink 64QAM, and supporting capability for all modulation modes of downlink OQAM and under downlink OQAM.

## Patentansprüche

1. Verfahren zum Melden der Unterstützungsfähigkeit einer Zelle für Abwärtsstreckenmodulation auf hoher Ebene, das für eine Drift-Funknetzsteuerung DRNC verwendet wird, das meldet, ob eine assoziative Zelle die Abwärtsstreckenmodulation auf hoher Ebene unterstützt oder nicht, wobei das Verfahren die folgenden Schritte umfasst:
nach dem Empfangen einer Anforderungsnachricht von einer betreuenden Funknetzsteuerung SRNC meldet die DRNC die Unterstützungsfähigkeitsinformation der assoziativen Zelle für die Abwärtsstreckenmodulation auf hoher Ebene durch Signalisierung an die SRNC, wobei die assoziative Zelle eine benachbarte Zelle ist, die eine Verbindung/Verbindungen erfolgreich einrichtet oder hinzufügt, nachdem sie die Anforderungsnachricht von der DRNC empfangen hat.

2. Verfahren nach Anspruch 1, **dadurch gekennzeichnet, dass** die Anforderungsnachricht beliebige der folgenden Nachrichten enthält: Funkverbindungsaufbau-Anforderungsnachricht und Funkverbindungs-Hinzufügungsanforderungsnachricht.

3. Verfahren nach Anspruch 2, **dadurch gekennzeichnet, dass** die Signalisierung beliebige der folgenden Nachrichten enthält: Funkverbindungsaufbauantwortnachricht, Funkverbindungsaufbaüfehlemachricht, Funkverbindungshinzufügungsantwortnachricht und Funkverbindungshinzufügungsfehlemachricht.

4. Verfahren nach Anspruch 3, **dadurch gekennzeichnet, dass**, wenn die DNRC die Funkverbindungsaufbau-Anforderungsnachricht oder die Funkverbindungs-Hinzufügungsanforderungsnachricht empfängt und eine oder mehrere benötigte Verbindungen erfolgreich einrichtet oder hinzufügt, die Funkverbindungsaufbauantwortnachricht oder die Funkverbindungshinzufügungsantwortnachricht, die an die SRNC gesendet wird, die Unterstützungsfähigkeitsinformation der assoziativen Zelle für die Abwärtsstreckenmodulation auf hoher Ebene befördert.

5. Verfahren nach Anspruch 3, **dadurch gekennzeichnet, dass**, wenn die DNRC die Funkverbindungsaufbau-Anforderungsnachricht oder Funkverbindungs-Hinzufügungsanforderungsnachricht empfängt und Teilverbindungen einrichtet oder hinzufügt und es nicht schafft, Teilverbindungen einzurichten oder hinzuzufügen, die Funkverbindungsaufbaufehlemachricht oder die Funkverbindungshinzufügungsfehlemachricht, die an die SRNC gesendet wird, die Unterstützungsfähigkeitsinformation der assoziativen Zelle für die Abwärtsstreckenmodulation auf hoher Ebene befördert.

6. Verfahren nach einem der vorangehenden Ansprüche 1 bis 5, **dadurch gekennzeichnet, dass** die assoziative Zelle eine oder mehrere Zellen einbezieht.

7. Verfahren nach einem der vorhergehenden Ansprüche 1 bis 5, **dadurch gekennzeichnet, dass** das Melden durch Signalisierung realisiert wird, indem Information hinzugefügt wird, welche die Unterstützungsfähigkeit für die Abwärtsstreckenmodulation auf hoher Ebene in dem Wert eines Zellfähigkeitscontainers eines vorhandenen Schnittstellenelements anzeigt.

8. Verfahren nach Anspruch 7, **dadurch gekennzeichnet, dass** die Unterstützungsfähigkeitsinformation der Abwärtsstreckenmodulation auf hoher Ebene im Bitmodus realisiert wird, wobei 0 die Nichtunterstützung der Abwärtsstreckenmodulation auf hoher Ebene anzeigt und 1 die Unterstützung der Abwärtsstreckenmodulation auf hoher Ebene anzeigt.

9. Verfahren nach einem der vorhergehenden Ansprüche 1 bis 5, **dadurch gekennzeichnet, dass** die Unterstützungsfähigkeitsinformation der Abwärtsstreckenmodulation auf hoher Ebene die Unterstützungsfähigkeit für die Abwärtsstreckenmodulation auf hoher Ebene durch Hinzufügen erweiterter Zellenfähigkeitsinformation darstellt.

10. Verfahren nach Anspruch 9, **dadurch gekennzeichnet, dass** das Darstellungsverfahren der Unterstützungsfähigkeitsinformation der Abwärtsstreckenmodulation auf hoher Ebene durch Unterstützungsanzeige oder Nichtunterstützungsanzeige realisiert wird.

11. Verfahren nach Anspruch 1, **dadurch gekennzeichnet, dass** die Unterstützungsfähigkeit für die Abwärtsstreckenmodulation auf hoher Ebene beliebige der folgenden Fähigkeiten oder Kombinationen davon umfasst: Unterstützungsfähigkeit für Abwärtsstrecken-64QAM, Unterstützungsfähigkeit für Abwärtsstrecken-OQAM, Unterstützungsfähigkeit für alle Modulationsarten von Abwärtsstrecken-64QAM und unterhalb von 64QAM und Unterstützungsfähigkeit für alle Modulationsarten von OQAM und unterhalb von OQAM.

12. Vorrichtung (300) zum Melden der Unterstützungsfähigkeit einer Zelle für Abwärtsstreckenmodulation auf hoher Ebene, die für eine Drift-Funknetzsteuerung DRNC verwendet wird, die meldet, ob eine assoziative Zelle unter der Zuständigkeit der DRNC die Abwärtsstreckenmodulation auf hoher Ebene unterstützt oder nicht, wobei die Vorrichtung (300) aufweist:
eine Meldeeinheit (302), die verwendet wird, um nach dem Empfang einer Anforderungsnachricht von einer betreuenden Funknetzsteuerung SRNC die Unterstützungsfähigkeitsinformation der assoziativen Zelle für die Abwärtsstreckenmodulation auf hoher Ebene durch Signalisierung an die SRNC zu melden, wobei die assoziative Zelle eine benachbarte Zelle ist, die eine Verbindung/Verbindungen erfolgreich einrichtet oder hinzufügt, nachdem die Anforderungsnachricht von der DRNC empfangen wurde.

13. Vorrichtung (300) nach Anspruch 12, **dadurch gekennzeichnet, dass** die Anforderungsnachricht beliebige der folgenden Nachrichten enthält: Funkverbindungsaufbau-Anforderungsnachricht und Funkverbindungs-Hinzufügungsanforderungsnachricht, und die Signalisierung beliebige der folgenden Nachrichten oder Kombinationen davon enthält: Funkverbindungsaufbauantwortnachricht, Funkverbindungsaufbaufehlernachricht, Funkverbindungshinzufügungsantwortnachricht und Funkverbindungshinzufügungsfehlernachricht.

14. Vorrichtung (300) nach Anspruch 13, **dadurch gekennzeichnet, dass**, wenn die DNRC die Funkverbindungsaufbau-Anforderungsnachricht oder die Funkverbindungs-Hinzufügungsanforderungsnachricht empfängt und eine oder mehrere Verbindungen erfolgreich einrichtet oder hinzufügt, die Funkverbindungsaufbauantwortnachricht oder die Funkverbindungshinzufügungsantwortnachricht, die von der Meldeeinheit (302) an die SRNC gesendet wird, die Unterstützungsfähigkeitsinformation der assoziativen Zelle für die Abwärtsstreckenmodulation auf hoher Ebene befördert.

15. Vorrichtung (300) nach Anspruch 13, **dadurch gekennzeichnet, dass**, wenn die DNRC die Funkverbindungsaufbau-Anforderungsnachricht oder Funkverbindungs-Hinzufügungsanforderungsnachricht empfängt und Teilverbindungen einrichtet oder hinzufügt und es nicht schafft Teilverbindungen einzurichten oder hinzuzufügen, die Funkverbindungsaufbaufehlemachricht oder die Funkverbindungshinzufügungsfehlernachricht, die von der Meldeeinheit (302) an die SRNC gesendet wird, die Unterstützungsfähigkeitsinformation der assoziativen Zelle für die Abwärtsstreckenmodulation auf hoher Ebene befördert.

16. Vorrichtung (300) nach einem der vorangehenden Ansprüche 12 bis 15, **dadurch gekennzeichnet, dass** die assoziative Zelle eine oder mehrere Zellen einbezieht.

17. Vorrichtung (300) nach einem der vorhergehenden Ansprüche 12 bis 15, **dadurch gekennzeichnet, dass** das Melden durch Signalisierung realisiert wird, indem Information hinzugefügt wird, welche die Unterstützungsfähigkeit für die Abwärtsstreckenmodulation auf hoher Ebene in dem Wert eines Zellfähigkeitscontainers eines vorhandenen Schnittstellenelements anzeigt; und die Unterstützungsfähigkeitsinformation der Abwärtsstreckenmodulation auf hoher Ebene im Bitmodus realisiert wird, wobei 0 die Nichtunterstützung der Abwärtsstreckenmodulation auf hoher Ebene anzeigt und 1 die Unterstützung der Abwärtsstreckenmodulation auf hoher Ebene anzeigt.

18. Vorrichtung (300) nach einem der vorhergehenden Ansprüche 12 bis 15, **dadurch gekennzeichnet, dass** die Unterstützungsfähigkeitsinformation der Abwärtsstreckenmodulation auf hoher Ebene die Unterstützungsfähigkeit für die Abwärtsstreckenmodulation auf hoher Ebene durch Hinzufügen erweiterter Zellenfähigkeitsinformation darstellt, und das Darstellungsverfahren der Unterstützungsfähigkeitsinformation der Abwärtsstreckenmodulation auf hoher Ebene durch die Unterstützungsanzeige oder Nichtunterstützungsanzeige realisiert wird.

19. Vorrichtung (300) nach Anspruch 12, **dadurch gekennzeichnet, dass** die Unterstützungsfähigkeit für die Abwärtsstreckenmodulation auf hoher Ebene beliebige der folgenden Fähigkeiten oder Kombinationen davon umfasst: Unterstützungsfähigkeit für Abwärtsstrecken-64QAM, Unterstützungsfähigkeit für Abwärtsstrecken-OQAM, Unterstützungsfähigkeit für alle Modulationsarten von Abwärtsstrecken-64QAM und unterhalb von 64QAM und Unterstützungsfähigkeit für alle Modulationsarten von OQAM und unterhalb von OQAM

## Revendications

1. Procédé pour rapporter la capacité de prise en charge d'une cellule pour une modulation de niveau haut de liaison descendante, qui est utilisé pour qu'un contrôleur de réseau radio de dérive, DRNC, rapport si une cellule associative prend en charge ou non une modulation de niveau haut de liaison descendante, dans lequel le procédé comprend les étapes suivantes consistant en ce que :
après la réception d'un message de demande d'un contrôleur de réseau radio desservant, SRNC, le DRNC rapporte les informations de capacité de prise en charge de la cellule associative pour une modulation de niveau haut de liaison descendante par l'intermédiaire d'une signalisation au SRNC, dans lequel la cellule associative est une cellule adjacente qui établit ou ajoute avec succès une liaison/des liaisons après la réception du message de demande par le DRNC.

2. Procédé selon la revendication 1, **caractérisé en ce que** le message de demande comprend l'un quelconque des messages suivants : un message de demande d'établissement de liaison radio et un message de demande d'ajout de liaison radio.

3. Procédé selon la revendication 2, **caractérisé en ce que** la signalisation comprend l'un quelconque des messages suivants : un message de réponse d'établissement de liaison radio, un message d'échec d'établissement de liaison radio, un message de réponse d'ajout de liaison radio et un message d'échec d'ajout de liaison radio.

4. Procédé selon la revendication 3, **caractérisé en ce que**, lorsque le DNRC reçoit le message de demande d'établissement de liaison radio ou le message de demande d'ajout de liaison radio et établit ou ajoute avec succès une ou de multiples liaisons nécessaires, le message de réponse d'établissement de liaison radio ou le message de réponse d'ajout de liaison radio envoyé au SRNC transporte les informations de capacité de prise en charge de la cellule associative pour une modulation de niveau haut de liaison descendante.

5. Procédé selon la revendication 3, **caractérisé en ce que**, lorsque le DNRC reçoit le message de demande d'établissement de liaison radio ou le message de demande d'ajout de liaison radio et établit ou ajoute des liaisons partielles et n'arrive pas à établir ou à ajouter des liaisons partielles, le message d'échec d'établissement de liaison radio ou le message d'échec d'ajout de liaison radio envoyé au SRNC transporte les informations de capacité de prise en charge de la cellule associative pour une modulation de niveau haut de liaison descendante.

6. Procédé selon l'une quelconque des revendications 1 à 5 précédentes, **caractérisé en ce que** la cellule associative implique une ou plusieurs cellules.

7. Procédé selon l'une quelconque des revendications 1 à 5 précédentes, **caractérisé en ce que** le rapport par l'intermédiaire d'une signalisation est effectué en ajoutant des informations indiquant la capacité de prise en charge pour une modulation de niveau haut de liaison descendante dans la valeur d'un contenant de capacité de cellule d'un présent élément d'interface.

8. Procédé selon la revendication 7, **caractérisé en ce que** les informations de capacité de prise en charge de la modulation de niveau haut de liaison descendante sont réalisées en mode binaire, dans lequel 0 indique l'absence de prise en charge de modulation de niveau haut de liaison descendante, et 1 indique la prise en charge de modulation de niveau haut de liaison descendante.

9. Procédé selon l'une quelconque des revendications 1 à 5 précédentes, **caractérisé en ce que** les informations de capacité de prise en charge de modulation de niveau haut de liaison descendante représentent la capacité de prise en charge pour la modulation de niveau haut de liaison descendante en ajoutant des informations de capacité de cellule étendue.

10. Procédé selon la revendication 9, **caractérisé en ce que** le procédé de représentation des informations de capacité de prise en charge de modulation de niveau haut de liaison descendante est effectué par une indication de prise en charge ou une indication d'absence de prise en charge.

11. Procédé selon la revendication 1, **caractérisé en ce que** la capacité de prise en charge pour une modulation de niveau haut de liaison descendante comprend l'une quelconque des capacités suivantes ou des combinaisons de celles-ci : une capacité de prise en charge pour une modulation 64QAM de liaison descendante, une capacité de prise en charge pour une modulation OQAM de liaison descendante, une capacité de prise en charge pour tous les modes de modulation de modulation 64QAM de liaison descendante et sous une modulation 64QAM de liaison descendante, et une capacité de prise en charge de tous les modes de modulation de modulation OQAM de liaison descendante et sous une modulation OQAM de liaison descendante.

12. Appareil (300) pour rapporter la capacité de prise en charge d'une cellule pour une modulation de niveau haut de liaison descendante, qui est utilisé pour qu'un contrôleur de réseau radio de dérive, DRNC, rapporte si une cellule associative sous la juridiction du DRNC prend en charge ou non une modulation de niveau haut de liaison descendante, dans lequel l'appareil (300) comprend :
une unité de rapport (302) qui est utilisée pour rapporter les informations de capacité de prise en charge de la cellule associative pour une modulation de niveau haut de liaison descendante par l'intermédiaire d'une signalisation à un contrôleur de réseau radio desservant, SRNC, après la réception d'un message de demande du SRNC, dans lequel la cellule associative est une cellule adjacente qui établit ou ajoute avec succès une liaison/des liaisons après la réception du message de demande par le DRNC.

13. Appareil (300) selon la revendication 12, **caractérisé en ce que** le message de demande comprend l'un quelconque des messages suivants : un message de demande d'établissement de liaison radio et un message de demande d'ajout de liaison radio ; et la signalisation comprend l'un quelconque des messages suivants ou des combinaisons de ceux-ci : un message de réponse d'établissement de liaison radio, un message d'échec d'établissement de liaison radio, un message de réponse d'ajout de liaison radio et un message d'échec d'ajout de liaison radio.

14. Appareil (300) selon la revendication 13, **caractérisé en ce que**, lorsque le DNRC reçoit le message de demande d'établissement de liaison radio ou le message de demande d'ajout de liaison radio et établit ou ajoute avec succès une ou de multiples liaisons, le message de réponse d'établissement de liaison radio ou le message de réponse d'ajout de liaison radio envoyé au SRNC par l'unité de rapport (302) transporte les informations de capacité de prise en charge de la cellule associative pour une modulation de niveau haut de liaison descendante.

15. Appareil (300) selon la revendication 13, **caractérisé en ce que**, lorsque le DNRC reçoit le message de demande d'établissement de liaison radio ou le message de demande d'ajout de liaison radio et établit ou ajoute des liaisons partielles et n'arrive pas à établir ou à ajouter des liaisons partielles, le message d'échec d'établissement de liaison radio ou le message d'échec d'ajout de liaison radio envoyé au SRNC par l'unité de rapport (302) transporte les informations de capacité de prise en charge de la cellule associative pour une modulation de niveau haut de liaison descendante.

16. Appareil (300) selon l'une quelconque des revendications 12 à 15 précédentes, **caractérisé en ce que** la cellule associative implique une ou plusieurs cellules.

17. Appareil (300) selon l'une quelconque des revendications 12 à 15 précédentes, **caractérisé en ce que** le rapport par l'intermédiaire d'une signalisation est effectué en ajoutant des informations indiquant la capacité de prise en charge pour une modulation de niveau haut de liaison descendante dans la valeur d'un contenant de capacité de cellule d'un présent élément d'interface ; et les informations de capacité de prise en charge de la modulation de niveau haut de liaison descendante sont réalisées en mode binaire, dans lequel 0 indique l'absence de prise en charge de modulation de niveau haut de liaison descendante, et 1 indique la prise en charge de modulation de niveau haut de liaison descendante.

18. Appareil (300) selon l'une quelconque des revendications 12 à 15 précédentes, **caractérisé en ce que** les informations de capacité de prise en charge de modulation de niveau haut de liaison descendante représentent la capacité de prise en charge pour la modulation de niveau haut de liaison descendante en ajoutant des informations de capacité de cellule étendue, et le procédé de représentation des informations de capacité de prise en charge de la modulation de niveau haut de liaison descendante est réalisé par l'intermédiaire d'une indication de prise en charge ou d'une indication d'absence de prise en charge.

19. Appareil (300) selon la revendication 12, **caractérisé en ce que** la capacité de prise en charge pour une modulation de niveau haut de liaison descendante comprend l'une quelconque des capacités suivantes ou des combinaisons de celles-ci : une capacité de prise en charge pour une modulation 64QAM de liaison descendante, une capacité de prise en charge pour une modulation OQAM de liaison descendante, une capacité de prise en charge pour tous les modes de modulation de modulation 64QAM de liaison descendante et sous une modulation 64QAM de liaison descendante, et une capacité de prise en charge pour tous les modes de modulation de modulation OQAM de liaison descendante et sous une modulation OQAM de liaison descendante.
